# EUROPEAN PATENT APPLICATION

(11) **EP 4 303 613 A1**
(43) Date of publication of application: **10.01.2024**
(21) Application number: 22763279.1
(22) Date of filing: 01.03.2022
(51) Int. Cl.: G01S 7/40, G01S 7/481, G01S 7/497, G01S 13/86, G01S 17/86

(54) **ELECTROMAGNETIC-WAVE DETECTION DEVICE AND MOVING BODY**

(30) Priority: 02.03.2021 JP 2021032930
(71) Applicant: Kyocera Corporation, Kyoto-shi Kyoto 612-8501 (JP)
(72) Inventor: OKADA Hiroki, Kyoto-shi, Kyoto 612-8501 (JP)
(74) Representative: Viering, Jentschura & Partner mbB Patent- und Rechtsanwälte
(86) International application number: PCT/JP2022/008671
(87) International publication number: WO 2022/186225

(57) **Abstract**

An electromagnetic-wave detection device 10 includes a radiating unit 11, an incidence unit 12, a first detection unit 13, a second detection unit 14, and a controller 15. The radiating unit 11 is configured to radiate electromagnetic waves in multiple different directions within a space. Electromagnetic waves from the space are incident on the incidence unit 12. The electromagnetic waves from the space include reflected waves resulting from electromagnetic waves radiated by the radiating unit 11 being reflected by an object within the space. The first detection unit 13 is configured to detect at least the reflected waves. The second detection unit 14 is configured to detect at least a portion of the electromagnetic waves incident on the incidence unit 12. Based on the detection results of the second detection unit 14, the controller 15 is configured to determine the presence or absence of an interfering factor that may interfere with the detection of reflected waves by the first detection unit 13.

## Description

### CROSS-REFERENCE TO RELATED APPLICATIONS

This application claims priority from Japanese Patent Application No. 2021-032930 filed in Japan on March 2, 2021, and the entire disclosure of this application is hereby incorporated by reference.

### TECHNICAL FIELD

The present disclosure relates to an electromagnetic-wave detection device and a mobile object.

### BACKGROUND OF INVENTION

In recent years, devices have been developed that obtain information about the surroundings from detection results acquired by multiple detectors that detect electromagnetic waves. For example, a known device measures the position of an object within an image using reflected waves out of electromagnetic waves with which an object has been irradiated (refer to Patent Literature 1).

### CITATION LIST

### PATENT LITERATURE

Patent Literature 1: Japanese Unexamined Patent Application Publication No. 2018-200927

### SUMMARY

In a First Aspect of the present disclosure, an electromagnetic-wave detection device includes a radiating unit, an incidence unit, a first detection unit, a second detection unit, and a controller.

The radiating unit is configured to radiate electromagnetic waves in multiple different directions in space.

Electromagnetic waves from the space are incident on the incidence unit, the electromagnetic waves including reflected waves resulting from electromagnetic waves radiated by the radiating unit being reflected by an object in the space.

The first detection unit is configured to detect at least the reflected waves incident on the incidence unit.

The second detection unit is configured to detect at least a portion of the electromagnetic waves incident on the incidence unit.

The controller is configured to determine, based on detection results of the second detection unit, a presence or absence of an interfering factor that may interfere with detection of the reflected waves by the first detection unit.

In a Second Aspect, a mobile object includes a radiating unit, an incidence unit, a first detection unit, a second detection unit, and a controller.

The radiating unit is configured to radiate electromagnetic waves in multiple different directions in space.

Electromagnetic waves from the space are incident on the incidence unit, the electromagnetic waves including reflected waves resulting from electromagnetic waves radiated by the radiating unit being reflected by an object in the space.

The first detection unit is configured to detect at least the reflected waves incident on the incidence unit.

The second detection unit is configured to detect at least a portion of the electromagnetic waves incident on the incidence unit.

The controller is configured to determine, based on detection results of the second detection unit, a presence or absence of an interfering factor that may interfere with detection of the reflected waves by the first detection unit.

### BRIEF DESCRIPTION OF THE DRAWINGS

FIG. 1 is a configuration diagram illustrating an outline configuration of an electromagnetic-wave detection device according to an embodiment.
FIG. 2 is a state diagram for the electromagnetic-wave detection device for illustrating the direction of travel of electromagnetic waves in a first state and a second state of switching elements in a switching unit of the electromagnetic-wave detection device in FIG. 1.
FIG. 3 is a timing chart illustrating the timing of the emission of electromagnetic waves and the timing of detection of electromagnetic waves in order to explain the principles of distance measurement carried out by a distance measurement sensor including a radiating unit, a first detection unit, and a controller in FIG. 1.
FIG. 4 is a diagram illustrating an example of smudges present in an image detected by the second detection unit in FIG. 1.
FIG. 5 is a diagram for illustrating smudges in a movement region and outside the movement region in the image in FIG. 4.
FIG. 6 is a diagram for illustrating that a threshold to be compared with the size of a smudge varies depending on the distance from a particular position in the image in FIG. 4.
FIG. 7 is a side view of a mobile object equipped with the electromagnetic-wave detection device in FIG. 1.
FIG. 8 is a flowchart for illustrating interfering factor detection processing performed by the controller in FIG. 1.
FIG. 9 is a configuration diagram illustrating an outline configuration of a variation of the electromagnetic-wave detection device according to the embodiment.

### DESCRIPTION OF EMBODIMENTS

Hereafter, an embodiment of an electromagnetic-wave detection device to which the present disclosure is applied will be described while referring to the drawings.

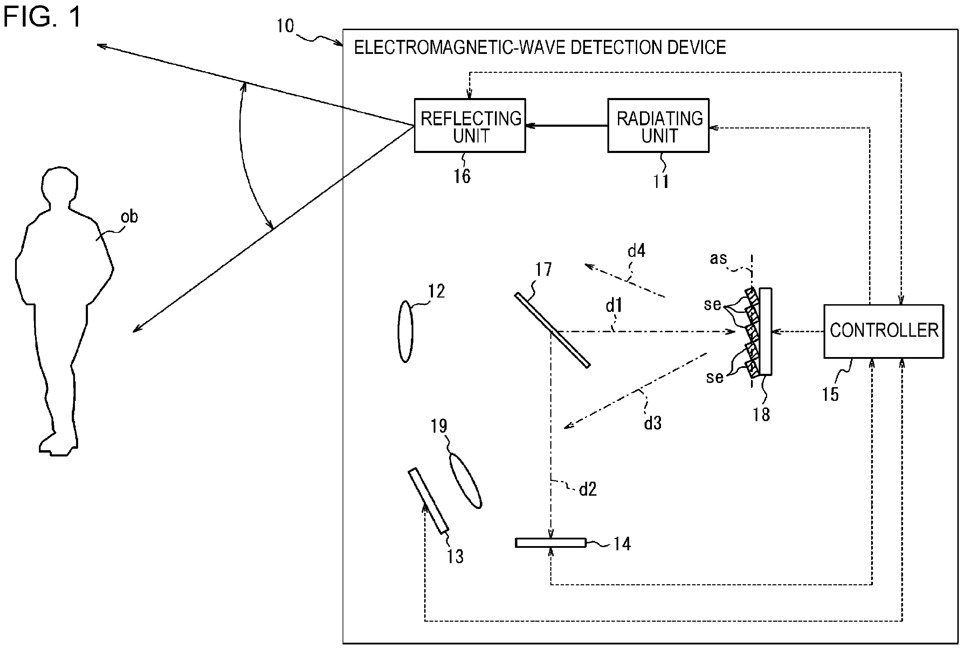

As illustrated in FIG. 1, an electromagnetic-wave detection device 10 according to an embodiment of the present disclosure includes a radiating unit 11, an incidence unit 12, a first detection unit 13, a second detection unit 14, and a controller 15.

In the drawings referred to below, dashed lines connecting individual functional blocks to each other represent the flow of control signals or information being communicated. Communication represented by the dashed lines may be wired or wireless communication. Solid lines projecting from the individual functional blocks represent electromagnetic waves in the form of beams.

The radiating unit 11 radiates electromagnetic waves in multiple different directions within space. The radiating unit 11 may change the position of electromagnetic waves radiated to an object ob within the space by emitting electromagnetic waves in multiple different directions in the space. The radiating unit 11 may scan the object ob using radiated electromagnetic waves. In this embodiment, the radiating unit 11 may be configured as a scanning distance measurement sensor that operates in cooperation with the first detection unit 13, which is described later. The radiating unit 11 may scan the object ob in one or two dimensional directions. In this embodiment, the radiating unit 11 scans the object ob in two dimensional directions.

The radiating unit 11 is configured so that at least part of a radiation region of electromagnetic waves is included in an electromagnetic wave detection range of the electromagnetic-wave detection device 10. More specifically, the radiating unit 11 is configured so that at least part of the region irradiated with the radiated electromagnetic waves is included in a detection range of the first detection unit 13. Therefore, at least a portion of the electromagnetic waves radiated to the object ob can be detected by the first detection unit 13.

The radiating unit 11 radiates electromagnetic waves in multiple different directions in space, for example, using a reflecting unit 16. The reflecting unit 16 may reflect the electromagnetic waves emitted from the radiating unit 11 in different directions, and thereby cause the electromagnetic waves emitted by the radiating unit 11 to be radiated in multiple different directions in space. The reflecting unit 16 may change the direction in which the electromagnetic waves are reflected based on control performed by the controller 15, which is described later. The reflecting unit 16 includes, for example, a microelectromechanical systems (MEMS) mirror, a polygon mirror, or a galvanometer mirror.

The radiating unit 11 may emit at least one out of infrared rays, visible light, ultraviolet rays, and radio waves. In this embodiment, the radiating unit 11 radiates infrared rays. The radiating unit 11 may emit a narrow beam of electromagnetic waves, for example, having a width of 0.5°. The radiating unit 11 may emit electromagnetic waves in the form of pulses. The radiating unit 11 may include a light emitting diode (LED) or a laser diode (LD). The radiating unit 11 may switch between radiating and stopping radiating electromagnetic waves based on control performed by the controller 15 described later.

The radiating unit 11 may radiate electromagnetic waves into the space without the electromagnetic waves passing through the incidence unit 12. Alternatively, the radiating unit 11 may, for example, include a mirror or the like on the image side of the incidence unit 12 and radiate electromagnetic waves via the incidence unit 12 into the space.

Electromagnetic waves from the space are incident on the incidence unit 12. Electromagnetic waves from the space may include reflected waves resulting from electromagnetic waves radiated by the radiating unit 11 being reflected by objects within the space. Objects within the space may include the object ob. The incidence unit 12 may, for example, include at least one out of a lens and a mirror in order to form an image of the object ob, which is a subject.

The first detection unit 13 detects at least the reflected waves, which are included in the electromagnetic waves incident on the incidence unit 12 and are generated by the electromagnetic waves radiated by the radiating unit 11 being reflected by an object within the space. The first detection unit 13 may detect electromagnetic waves such as at least one out of infrared rays, visible light, ultraviolet rays, and radio waves. The first detection unit 13 may detect electromagnetic waves in the same band as those radiated by the radiating unit 11. The first detection unit 13 may transmit detection information to the controller 15 as a signal, the detection information indicating that the first detection unit 13 has detected reflected waves from an object.

The first detection unit 13 more specifically includes an element constituting a distance measurement sensor. For example, the first detection unit 13 includes a single element such as an avalanche photodiode (APD), a photodiode (PD), or a distance measurement image sensor. The first detection unit 13 may include an array of elements such as an APD array, a PD array, a distance measurement imaging array, or a distance measurement image sensor.

The reflected waves may be made incident on the first detection unit 13 using a variety of configurations. For example, a separation unit 17 provided on the path of electromagnetic waves passing through the incidence unit 12 may be used to separate the electromagnetic waves incident on the separation unit 17, so that the reflected waves are made incident on the first detection unit 13.

The separation unit 17 may be provided between the incidence unit 12 and a primary image formation position, which is determined by the incidence unit 12, of the image of the object ob at a prescribed position away from the incidence unit 12. The separation unit 17 may separate the incident electromagnetic waves so that the separated beams of electromagnetic waves travel in a first direction d1 and a second direction d2. In this embodiment, the first detection unit 13 may be configured to be able to detect electromagnetic waves traveling in the first direction d1.

More specifically in this embodiment, the separation unit 17 transmits a portion of the incident electromagnetic waves, including at least the reflected waves, in the first direction d1 and reflects another portion of the electromagnetic wave in the second direction d2. The separation unit 17 may transmit a portion of the incident electromagnetic waves in the first direction d1 and may transmit another portion of the electromagnetic waves in the second direction d2. The separation unit 17 may refract a portion of the incident electromagnetic waves in the first direction d1 and may refract another portion of the electromagnetic waves in the second direction d2. The separation unit 17 is, for example, a half mirror, a beam splitter, a dichroic mirror, a cold mirror, a hot mirror, a metasurface, a deflector element, or a prism.

A switching unit 18 may be provided on a path of the electromagnetic wave along which the electromagnetic waves pass through the incidence unit 12 and reach the first detection unit 13. In the configuration in which the separation unit 17 is provided as described above, the switching unit 18 may be provided on the path of the electromagnetic waves traveling in the first direction d1 from the separation unit 17. The switching unit 18 may be provided at or near the primary image formation position, which is defined by the incidence unit 12 in the second direction d2 from the separation unit 17, of the image of the object ob at a prescribed position away from the incidence unit 12.

The switching unit 18 may have an action surface as on which electromagnetic waves that have passed through the incidence unit 12 and the separation unit 17 are incident. The action surface as may include multiple switching elements se arrayed in a two-dimensional pattern. The action surface as is a surface that produces an action, for example, reflection and transmission, on electromagnetic waves in at least one out of a first state and a second state, which are described later. The switching unit 18 may be capable of switching each switching element se between the first state in which the electromagnetic waves incident on the action surface as are made to travel in a third direction d3 and the second state in which the electromagnetic waves incident on the action surface as are made to travel in a fourth direction d4. The switching unit 18 may further specifically include a reflective surface that reflects electromagnetic waves in each switching element se. The switching unit 18 may switch each switching element se between the first state and the second state by changing the orientation of the reflective surface of each switching element se.

The switching unit 18 may include, for example, a digital micro mirror device (DMD). The DMD can switch the reflective surface in each switching element se to either a +12° or 12° inclination with respect to the action surface as by driving small reflective surfaces constituting the action surface as. The action surface as may be parallel to the substrate surface of the substrate on which the small reflective surfaces of the DMD are placed.

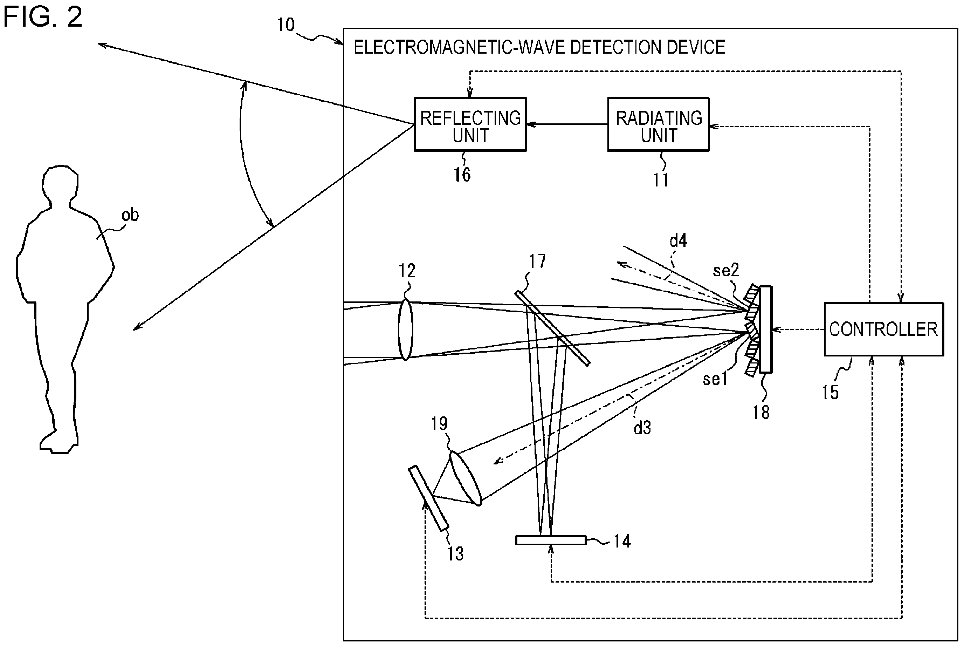

The switching unit 18 may switch between the first and second states in each switching element se based on control performed by the controller 15 described below. For example, as illustrated in FIG. 2, the switching unit 18 can simultaneously switch some switching elements se1 to the first state so as to make the electromagnetic waves incident on the switching elements se1 travel in the third direction d3 and switch some other switching elements se2 to the second state so as to make the electromagnetic waves incident on the switching elements se2 travel in the fourth direction d4. Electromagnetic waves traveling in the third direction travel toward the first detection unit 13. Electromagnetic waves traveling in the fourth direction do not travel toward the first detection unit 13.

As illustrated in FIG. 1, a later-stage optical system 19 may be provided between the first detection unit 13 and the switching unit 18. The later-stage optical system 19 may include, for example, at least one out of a lens and a mirror. The later-stage optical system 19 may form an image of the object ob from the electromagnetic waves whose direction of travel has been switched by the switching unit 18.

When the first detection unit 13 is a single element constituting a distance measurement sensor as described above, the first detection unit 13 only needs to be able to detect electromagnetic waves, and an image of an object does not need to be formed on the detection surface. Therefore, the first detection unit 13 does not need to be provided at a secondary image formation position, which is an image formation position determined by the later-stage optical system 19. In other words, in this configuration, the first detection unit 13 may be disposed anywhere along the path of the electromagnetic waves that have been made to travel in the third direction d3 by the switching unit 18 and then travel through the later-stage optical system 19, so long as electromagnetic waves from all angles of view can be made incident on the detection surface.

The second detection unit 14 detects at least a portion of the electromagnetic waves incident on the incidence unit 12. At least a portion of the electromagnetic waves may be made incident on the second detection unit 14 using a variety of methods. For example, the reflected waves may be made incident on the second detection unit 14 by using the separation unit 17 to separate the electromagnetic waves as described above.

In a configuration in which the separation unit 17 is applied, the second detection unit 14 may be provided on the path of the electromagnetic waves traveling in the first direction d1 from the separation unit 17. The second detection unit 14 may be provided at or near an image formation position, which is determined by the incidence unit 12 in the first direction d1 from the separation unit 17, of the image of the object ob at a prescribed position away from the incidence unit 12.

The second detection unit 14 may include an element array. For example, the second detection unit 14 may include an image-capturing element, such as an image sensor or imaging array, that captures an image from the electromagnetic waves formed on the detection surface and generates image information corresponding to the captured object ob. The second detection unit 14 may further specifically capture a visible light image. The second detection unit 14 may transmit the generated image information as a signal to the controller 15.

The second detection unit 14 may capture images other than visible light images such as infrared ray, ultraviolet ray, and radio wave images. The second detection unit 14 may include a distance measurement sensor. In a configuration where the second detection unit 14 includes a distance measurement sensor, the electromagnetic-wave detection device 10 can acquire distance information in the form of an image using the second detection unit 14. The second detection unit 14 may include a thermosensor or the like. In a configuration where the second detection unit 14 includes a thermosensor, the electromagnetic-wave detection device 10 can acquire temperature information in the form of an image using the second detection unit 14.

The controller 15 includes one or more processors and memories. Such processors may include at least either of general-purpose processors into which specific programs are loaded in order to perform specific functions and dedicated processors dedicated to specific processing. Dedicated processors may include an application specific integrated circuit (ASIC). Processors may include programmable logic devices (PLDs). PLDs may include field-programmable gate arrays (FPGAs). The controller 15 may be either a system-on-a-chip (SoC) or a system in a package (SiP), in which one or more processors work together.

The controller 15 may acquire information about the surroundings of the electromagnetic-wave detection device 10 based on the electromagnetic waves detected by the second detection unit 14 and the first detection unit 13, respectively. Information about the surroundings may be, for example, image information, distance information, and temperature information. In this embodiment, the controller 15 may acquire distance information by performing ranging on an object located in a radiation direction of the radiating unit 11 based on detection information detected by the first detection unit 13. More specifically, the controller 15 may generate distance information using the Time-of-Flight (ToF) method, as described below. In this embodiment, the controller 15 acquires the electromagnetic waves detected by the second detection unit 14 as image information. In this embodiment, the controller 15 can calculate the radiation direction based on a driving signal that is input to make the reflecting unit 16 change the direction in which the electromagnetic waves are reflected.

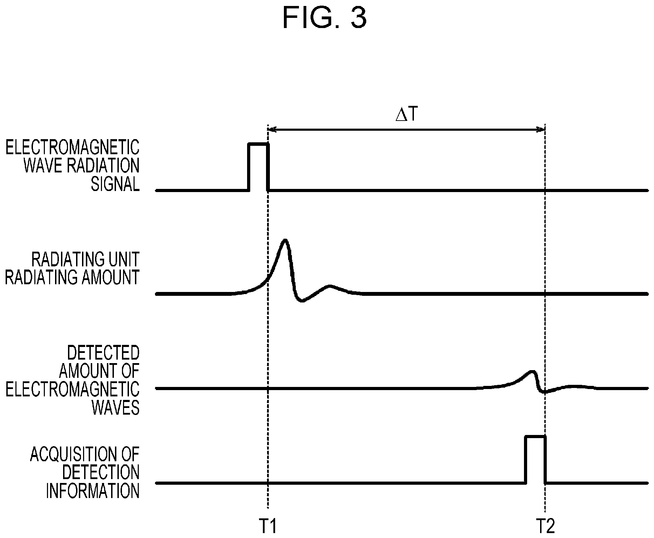

As illustrated in FIG. 3, the controller 15 may cause the radiating unit 11 to emit pulsed electromagnetic waves by inputting an electromagnetic wave radiation signal to the radiating unit 11 (refer to "electromagnetic wave radiation signal"). The radiating unit 11 may radiate electromagnetic waves based on the input electromagnetic wave radiation signal (refer to "radiating unit radiation amount"). The electromagnetic waves emitted by the radiating unit 11, reflected by the reflecting unit 16, and radiated onto any irradiated region are reflected in that irradiated region. The controller 15 may switch at least some of the switching elements se in an image forming region in the switching unit 18, the image forming region corresponding to the reflected waves from that irradiated region through the incidence unit 12, to the first state and switch other switching elements se to the second state. Switching of the switching element se may be performed prior to the radiation of the electromagnetic waves by the radiating unit 11. The controller 15 may switch the switching elements se to the first state each time the radiating unit 11 radiates pulsed electromagnetic waves in accordance with the next radiation direction of the electromagnetic waves to be realized by the reflecting unit 16. In other words, at least some of the switching elements se within the image forming region in the switching unit 18, the image-forming region corresponding to the reflected waves of the electromagnetic waves radiated from the radiating unit 11, may then be switched to the first state and the other switching elements se may be switched to the second state. When the first detection unit 13 detects electromagnetic waves reflected in the irradiated region (refer to "detected amount of electromagnetic waves"), the first detection unit 13 notifies the controller 15 of the detection information, as described above.

The controller 15 may include a time measuring large-scale integrated circuit (LSI) and may measure a time ΔT from a time T1 when the radiating unit 11 radiates electromagnetic waves up until a time T2 when the detection information is acquired (refer to "acquisition of detection information"). The controller 15 may calculate the distance to an irradiated position by multiplying the time ΔT by the speed of light and dividing by 2. The controller 15 may calculate the irradiated position based on the driving signal output to the reflecting unit 16, as described above. The controller 15 may create distance information in the form of an image by calculating the distance to each irradiated position corresponding to radiation directions while changing the radiation direction.

As described above, the electromagnetic-wave detection device 10 is configured to create distance information using Direct ToF, in which the time taken from when a laser beam is emitted until the laser beam returns is directly measured, but is not limited to this configuration. For example, the electromagnetic-wave detection device 10 may create distance information using Flash ToF, in which electromagnetic waves are radiated at a fixed interval and the time taken for the electromagnetic waves to return is indirectly measured from the phase difference between the radiated and returning electromagnetic waves. The electromagnetic-wave detection device 10 may also create distance information using other ToF methods, for example, Phased ToF.

Based on the detection results of the second detection unit 14, the controller 15 may determine the presence or absence of an interfering factor that may interfere with the detection of reflected waves by the first detection unit 13. The detection results of the second detection unit 14 are, for example, image information, as described above. An interfering factor is, for example, a smudge adhering to a surface of the incidence unit 12 of the electromagnetic-wave detection device 10 or to the surface of a transmissive member such as a front glass or windshield disposed in front of the electromagnetic-wave detection device 10 in a mobile object or the like in which the electromagnetic-wave detection device 10 is installed. The smudges are, for example, water droplets such as raindrops, mud, or dust. These smudges may hinder electromagnetic waves from being incident on the second detection unit 14. These smudges may also hinder reflected waves from being incident on the first detection unit 13.

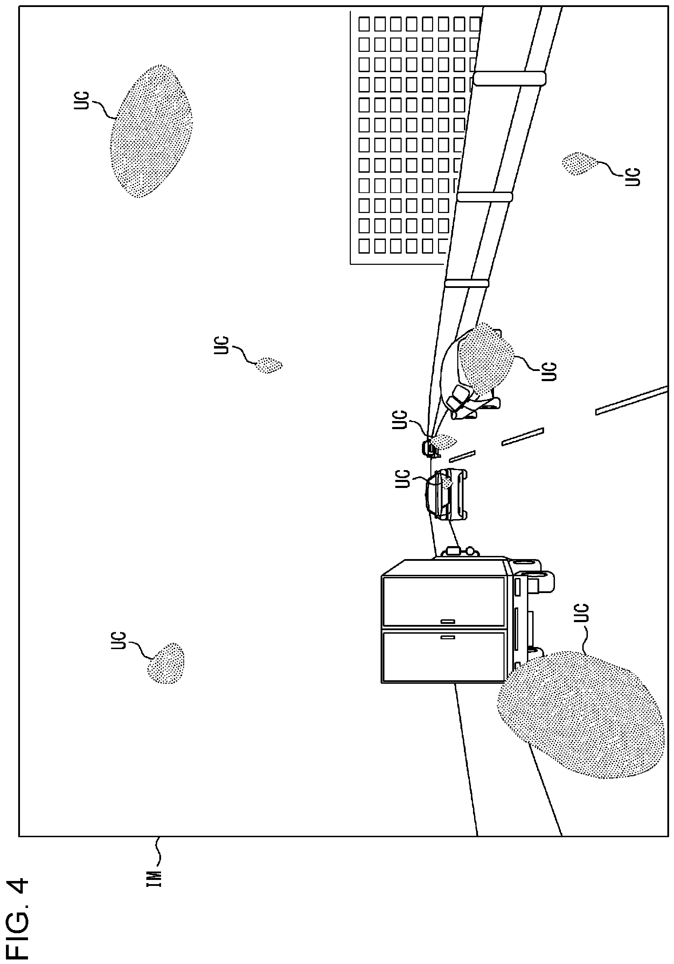

In a configuration where the second detection unit 14 detects image information, the controller 15 may determine the presence or absence of smudges UC in an image IM detected by the second detection unit 14, as illustrated in FIG. 4. The controller 15 may determine the presence or absence of smudges in the image IM using a variety of methods.

The controller 15 may, for example, calculate the spatial frequency for each of multiple partial regions making up the image IM. A partial region may be a pixel that constitutes the image IM or may be a region made up of multiple adjacent pixels. The controller 15 may determine that a smudge UC is present in a partial region when the spatial frequency is less than or equal to a frequency threshold.

Alternatively, the controller 15 may determine the presence or absence of smudges UC in a partial region based on color, luminance, or the like. Alternatively, the controller 15 may use machine learning in order to determine the presence or absence of smudges UC in the image IM.

The controller 15 may remove the detection results of the first detection unit 13 for the reflected waves incident from the object ob toward the incidence unit 12 that have been affected by an interfering factor. In other words, the controller 15 may remove the detection results of the first detection unit 13 for the reflected waves that are incident via the interfering factor. The controller 15 may create distance information in the form of an image while excluding the detection results of the first detection unit 13 for that particular radiation direction. Rather than removing the detection results of the first detection unit 13 for that particular radiation direction, the controller 15 may instead generate distance information with an attached flag indicating that the reliability is lower than that of detection results for other radiation directions.

Based on the presence of an interfering factor, the controller 15 may output an inaccuracy notification regarding the detection results of the first detection unit 13 to an external device, such as, for example, a control device of a mobile object, as described below. An inaccuracy notification is, for example, a warning or an order to stop.

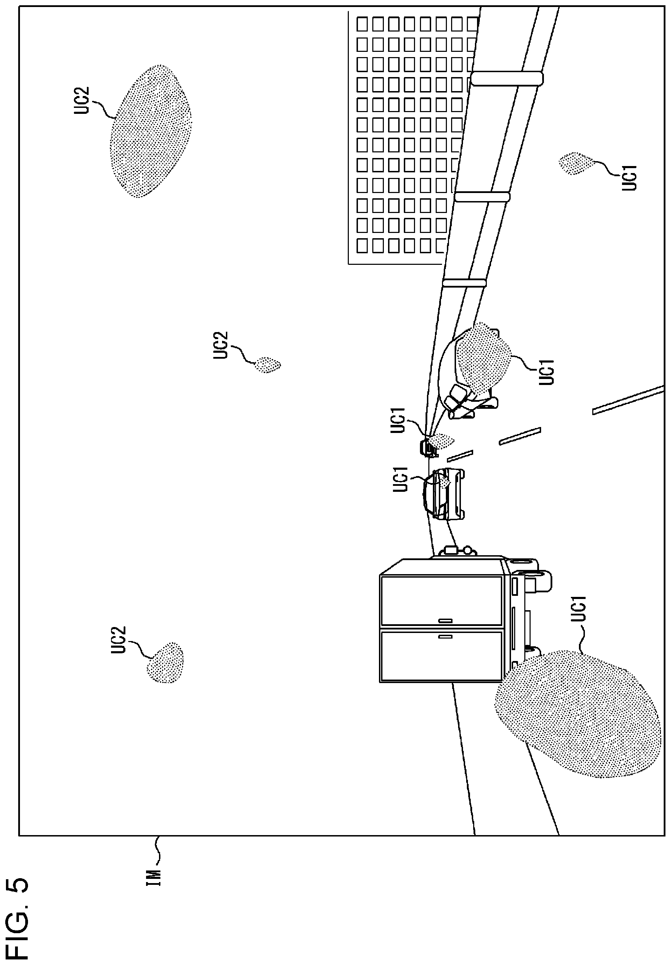

If an interfering factor is present, the controller 15 may output an inaccuracy notification based on the position of the interfering factor in the full detection results of the second detection unit 14. The full detection results of the second detection unit 14 are, for example, the image IM. The positions of the interfering factors are, for example, the positions of the smudges UC in the image IM. In this configuration, the controller 15 outputs an inaccuracy notification, for example, when smudges UC1 are present in a region recognized as the ground and regions of objects on the ground in the image IM, as illustrated in FIG. 5. Alternatively, the controller 15 does not output an inaccuracy notification even if, for example, smudges UC2 are present in the image IM only in regions outside a movement region, such as the sky. In other words, the controller 15 outputs an inaccuracy notification, for example, if there is an interfering factor, a smudge UC, in the movement region in the full detection results of the second detection unit 14, which is the image IM. A movement region is a region within the image IM where a mobile object, described below, may be located after the mobile object has moved, in other words, a region in which the mobile object can move. A movement region is, for example, a region in the image IM that excludes the sky area and includes at least the road on which the mobile object is traveling.

If an interfering factor is present, the controller 15 may output an inaccuracy notification based on the size of the interfering factor in the full detection results of the second detection unit 14. As described above, the full detection results of the second detection unit 14 consist of, for example, the image IM. The positions of the interfering factors are, for example, the positions of the smudges UC in the image IM. In this configuration, the controller 15 outputs an inaccuracy notification, for example, if there is a large smudge UC relative to the image IM. Alternatively, the controller 15 does not output an inaccuracy notification if, for example, the size of the largest detectable smudge UC is small relative to the image IM.

More specifically, the controller 15 may identify that a relatively large interfering factor is present and output an inaccuracy notification when the size of the interfering factor is greater than or equal to a threshold. As described above, the full detection results of the second detection unit 14 consist of, for example, the image IM. The positions of the interfering factors are, for example, the positions of the smudges UC in the image IM. In such a configuration, the size of an interfering factor may be measured in terms of the number of pixels that are identified as a smudge UC and the number of pixels corresponding to the maximum diameter of a region identified as a smudge. The threshold may be defined, for example, with respect to the number of pixels constituting the image IM.

A threshold may be set for the size of individual interfering factors in the full detection results of the second detection unit 14. In such a configuration, the controller 15 may output an inaccuracy notification when the size of any of the individual interfering factors in the full detection results of the second detection unit 14 is greater than or equal to the threshold. Furthermore, the image IM may be divided into multiple regions of a prescribed size and a threshold may be set for the size of each interfering factor in each region or for the sum of the sizes of all the interfering factors. In such a configuration, different thresholds may be set in accordance with the positions of the multiple regions within the image IM. For example, a lower threshold may be set for regions that are relatively important (a central portion of the image IM). The controller 15 may output an inaccuracy notification if an interfering region present in any of the regions is greater than or equal to the threshold set for that region.

Alternatively, a threshold may be set for the sum of the sizes of all the interfering factors in the image IM. In such a configuration, the controller 15 may output an inaccuracy notification if the sum of the magnitudes of all interfering factors within the image IM is greater than or equal to a threshold or if the sum of the magnitudes of all interfering factors within the image IM account for a fraction of the image IM that is greater than or equal to a threshold. Furthermore, the image IM may be divided into multiple regions of a prescribed size, and an inaccuracy notification may be output if the sum of values obtained by assigning prescribed weightings to the sizes of the smudges UC present in each region is greater than or equal to a threshold. In such a configuration, different weightings may be set in accordance with the positions of the multiple regions within the image IM. For example, a larger weighting may be set for a region that is relatively important (a central portion of the image IM).

Alternatively, the threshold may vary in accordance with the speed of movement of the mobile object in which the electromagnetic-wave detection device 10 is installed, as described below. Specifically, the higher the speed of the mobile object, the lower the threshold that may be set.

Alternatively, the electromagnetic-wave detection device 10 may include a luminance sensor and a threshold may be set in accordance with the amount of ambient light (i.e., sunlight), and, for example, the threshold may be set lower when the amount of ambient light is higher.

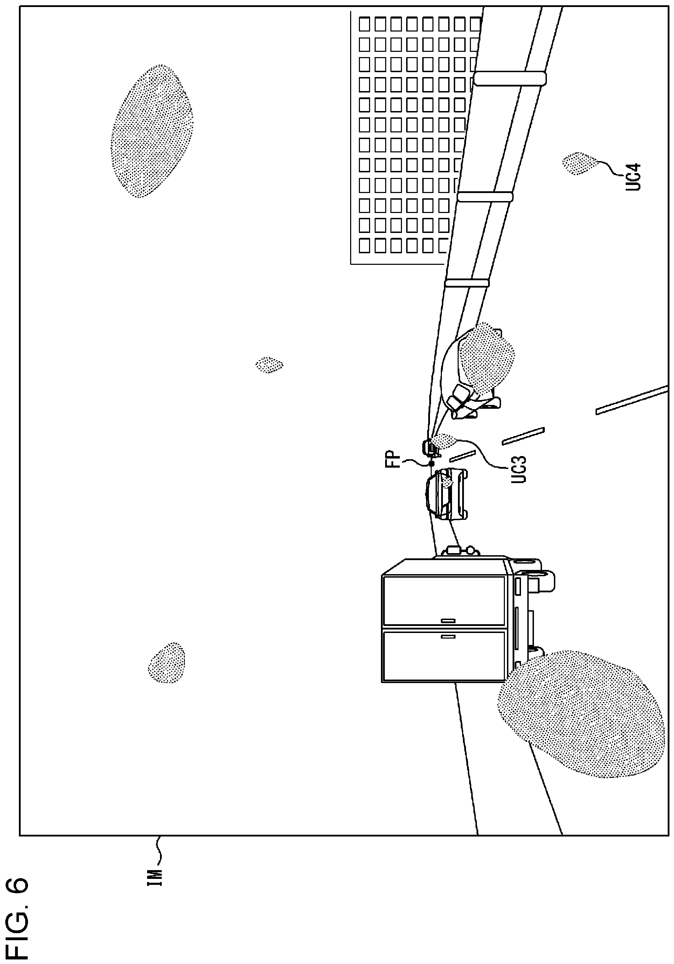

The threshold may become smaller with increasing proximity to a specific position within the full detection results of the second detection unit 14 in a configuration in which thresholds are set for the sizes of individual interfering factors. As described above, the full detection results of the second detection unit 14 consist of, for example, the image IM. The positions of the interfering factors are, for example, the positions of the smudges UC in the image IM. In such a configuration, for example, a furthest position FP on the path of travel, which is recognizable in the image IM, may be defined as a specific position as illustrated in FIG. 6. Thus, even if the sizes are the same, the size of a smudge UC3, which is closer to the furthest position FP, may be greater than or equal to the threshold and the size of a smudge UC4, which is further away from the furthest position FP, may be below the threshold. In other words, the closer to the farthest position FP, the threshold may be set so as to be lower. In other words, lower thresholds may be set for regions in the image IM that are farther away from the electromagnetic-wave detection device 10. In other words, the smallest threshold may be set at the furthest position FP. The reason for setting the thresholds in this way is to address the fact that the intensity of reflected light tends to decrease with increasing closeness to the furthest position FP, and the reliability of the detection results of the first detection unit 13 is likely to be reduced by the presence of interfering factors.

Upon confirming the presence of an interfering factor, the controller 15 may switch more switching elements se to the first state when the reflected waves from the object ob to the incidence unit 12 enter the switching unit 18 via the interfering factor compared to when the waves enter without passing through the interfering factor.

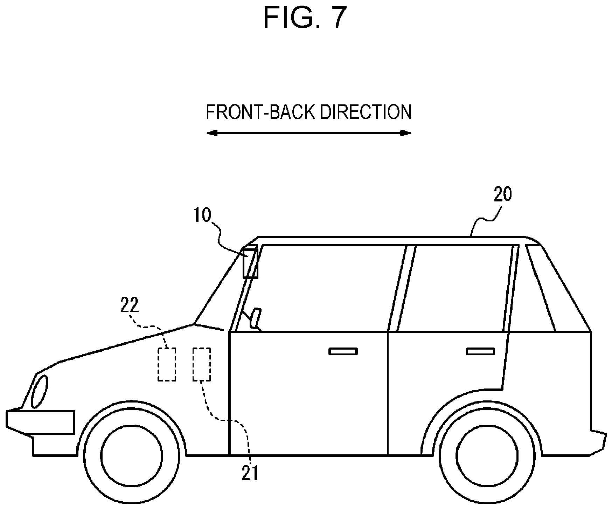

As illustrated in FIG. 7, the electromagnetic-wave detection device 10 may be installed in a mobile object 20. The electromagnetic-wave detection device 10 may be installed, for example, so as to be capable of detecting electromagnetic waves in front of the mobile object 20.

Examples of the mobile object 20 may include vehicles, ships, and aircraft. Vehicles may include, for example, automobiles, industrial vehicles, rail vehicles, motorhomes, and fixed-wing aircraft that taxi along runways. Automobiles may include, for example, passenger cars, trucks, buses, motorcycles, and trolleybuses. Industrial vehicles may include, for example, industrial vehicles used in agriculture and construction. Industrial vehicles may include, for example, forklift trucks and golf carts. Industrial vehicles used in agriculture may include, for example, tractors, cultivators, transplanters, binders, combine harvesters, and lawn mowers. Industrial vehicles used in construction may include, for example, bulldozers, scrapers, excavators, cranes, dump trucks, and road rollers. Vehicles may include vehicles that are human powered. The categories of vehicles are not limited to the above examples. For example, automobiles may include industrial vehicles that can travel along roads. The same vehicles may be included in multiple categories. Ships may include, for example, jet skis, boats, and tankers. Examples of aircraft may include fixed-wing aircraft and rotary-wing aircraft.

The electromagnetic-wave detection device 10 may, for example, be installed inside the mobile object 20 and detect electromagnetic waves incident from outside the mobile object 20 through the windshield. The electromagnetic-wave detection device 10 may be disposed in front of the rear view mirror or on the dashboard. The electromagnetic-wave detection device 10 may be fixed to any out of a front bumper, a fender grille, a side fender, a light module, and a hood of the mobile object 20.

The mobile object 20 may include a notification unit 21 and a driving support unit 22.

The notification unit 21 may issue a warning to the occupant if the controller 15 of the electromagnetic-wave detection device 10 identifies the presence of an interfering factor, more specifically, if the controller 15 receives an inaccuracy notification from the electromagnetic-wave detection device 10. The notification unit 21 may be, for example, a display capable of displaying a warning image, a speaker capable of generating a warning sound, a lamp capable of leaving a light kept on as a warning, and so on. Regarding "notification", a method for removing the interfering factor may be reported and the position of the interfering factor (i.e., its position at the incidence unit 12, windshield, etc.) that caused the inaccuracy notification to be output may be reported. By indicating the position of the interfering factor to be removed together with the image IM on the display, the occupant is able to quickly remove the interfering factor.

The driving support unit 22 may halt the movement of the mobile object 20 when the controller 15 of the electromagnetic-wave detection device 10 identifies the presence of an interfering factor, more specifically, when the controller 15 receives an inaccuracy notification from the electromagnetic-wave detection device 10. The driving support unit 22 may be a device that assists the driver in driving, such as autocruise.

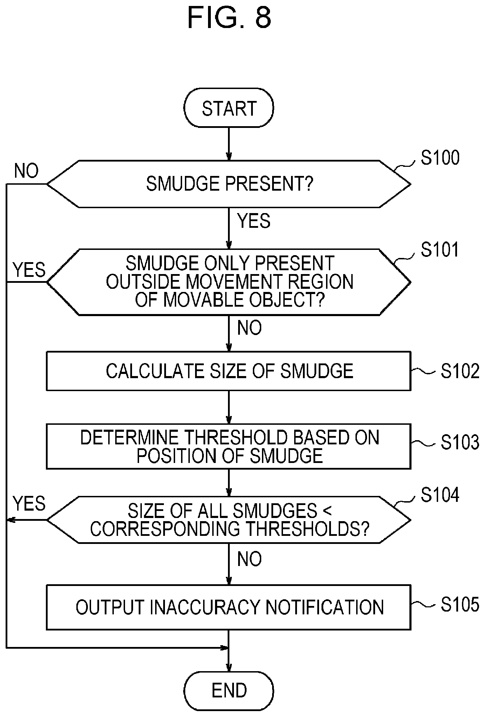

Next, interfering factor detection processing performed by the controller 15 in this embodiment will be described using the flowchart in FIG. 8. For convenience, the interfering factor detection processing will be described using, as an example, a configuration in which the full detection results of the second detection unit 14 consist of an image IM and the position of the interfering factor is the position of a smudge UC in the image IM. The interfering factor detection processing begins each time the second detection unit 14 acquires full detection results, or more specifically, one frame of image information. Alternatively, the interfering factor detection processing may be initiated periodically. Thus, even if an inaccuracy notification is received from the electromagnetic-wave detection device 10, outputting of the inaccuracy notification may be stopped or a notification indicating that the interfering factor has been removed may be output when the interfering factor has been removed by a wiper or the like.

In Step S100, the controller 15 determines the presence or absence of a smudge UC in an image IM corresponding to acquired image information. If there are no smudges UC in the entire image IM, the interfering factor detection processing ends. If there is at least one smudge UC in image the IM, the process proceeds to Step S101.

In Step S101, the controller 15 determines whether the smudge UC whose presence was confirmed in Step S 100 is located only outside a movement region within the image IM. When the smudge UC is located only outside the movement region, the interfering factor detection processing is terminated. If at least one smudge UC is located in the movement region, rather than only outside the movement region, the process proceeds to Step S102.

In Step S102, the controller 15 calculates the size of the smudge UC that was determined to be located in the movement region in Step S103. After the calculation, the process advances to Step S103.

In Step S103, the controller 15 determines a threshold for each smudge UC based on the position in the image IM of the smudge UC whose size was calculated in Step S102. After the determination, the process proceeds to Step S104. The controller 15 may determine the threshold corresponding to the position at which the smudge UC was detected by reading a threshold for the position within the image IM stored in the memory provided in the electromagnetic-wave detection device 10.

In Step S104, the controller 15 compares the size of the smudge UC calculated in Step S102 with the threshold corresponding to that smudge UC determined in Step S103. The controller 15 determines whether the sizes of all the smudges UC are less than the thresholds corresponding to the respective smudges UC. When the sizes of all the smudges UC are less than the thresholds corresponding to the respective smudges UC, the interfering factor detection processing is terminated. When the size of at least one smudge UC is greater than or equal to the corresponding threshold, the process proceeds to Step S105.

In Step S105, the controller 15 outputs an inaccuracy notification to an external device. After the output, the interfering factor detection processing is terminated.

The thus-configured electromagnetic-wave detection device 10 of this embodiment determines the presence or absence of interfering factors that may interfere with the detection of reflection waves using the first detection unit 13 based on the detection results of the second detection unit 14. With this configuration, the electromagnetic-wave detection device 10 can detect interfering factors that cannot be determined by only using the detection results of the first detection unit 13. Therefore, the electromagnetic-wave detection device 10 can determine the reliability of detection results produced by some detection units.

The electromagnetic-wave detection device 10 of this embodiment outputs an inaccuracy notification concerning the detection results of the first detection unit 13 based on the presence of interfering factors. With this configuration, the electromagnetic-wave detection device 10 can notify an external device that performs control based on the detection results of the first detection unit 13 or a user who desires such detection results that the reliability of the detection results of the first detection unit 13 has decreased.

The electromagnetic-wave detection device 10 of this embodiment outputs an inaccuracy notification based on the positions of interfering factors in the full detection results of the second detection unit 14. For an external device or user receiving an inaccuracy notification, the detection results of the first detection unit 13 may be needed for some positions in the full detection results of the second detection unit 14, and the detection results of the first detection unit 13 at other positions might not be needed. For such an external situation, the electromagnetic-wave detection device 10 having the above-described configuration may output an inaccuracy notification only when interfering factors are present at the positions where the detection results of the first detection unit 13 are needed.

The electromagnetic-wave detection device 10 of this embodiment outputs an inaccuracy notification if the individual sizes or the sum of the sizes of the interfering factors in the full detection results of the second detection unit 14 is greater than or equal to a threshold. If an interfering factor is relatively small, the reliability of the detection results of the first detection unit 13 will not be decreased to the extent that the detection results will become unusable. In response to such a phenomenon, the electromagnetic-wave detection device 10 having the above-described configuration can output an inaccuracy notification if the detection results become so unreliable as to render the results unusable for an external device or user.

In the electromagnetic-wave detection device 10 of this embodiment, the threshold is smallest at the farthest position in the full detection results of the second detection unit 14. The first detection unit 13 and the second detection unit 14 detect electromagnetic waves affected by objects in space. Therefore, at the farthest position, the size of an object corresponding to the electromagnetic waves detected by the first detection unit 13, in other words, the set of mutually adjacent radiation positions or radiation directions where the detection results are approximately equal, is small. In response to such a phenomenon, the electromagnetic-wave detection device 10 having the above-described configuration reduces the threshold for relatively small objects in the detection results of the second detection unit 14 due to the objects being farther away from the electromagnetic-wave detection device 10 in real space. Therefore, the electromagnetic-wave detection device 10 can more appropriately output inaccuracy notifications taking into account the distances in real space.

The electromagnetic-wave detection device 10 of this embodiment can switch some switching elements se in the switching unit 18 to the first state and switch some other switching elements se to the second state. With this configuration, the electromagnetic-wave detection device 10 is able to detect information based on the electromagnetic waves using the first detection unit 13 for each part of the object ob which emits the electromagnetic waves incident on each switching element se. As described above, the controller switches the switching elements se in the image forming region where at least the reflected waves form an image to the first state among the switching elements se. In the switching, there may be multiple switching elements se switched to the first state, not just a single one. The more switching elements se are switched to the first state, the greater the amount of light made up of the reflected waves traveling to the first detection unit 13. Therefore, if the controller 15 determines that the size of a smudge UC in the image IM is smaller than the threshold, the number of switching elements se that are in the first state among the switching elements se where the reflected waves incident through the smudge UC are formed into an image may be increased in accordance with the size of the smudge UC. If the number of switching elements se switched to the first state is increased, the radio wave detection device 10 may withhold outputting of the inaccuracy notification until the size of the smudge UC is greater than or equal to the threshold.

The mobile object 20 of this embodiment includes the notification unit 21 that issues a warning when the presence of interfering factors is recognized. With this configuration, the mobile object 20 can notify the occupant that the first detection unit 13 is becoming unreliable.

The mobile object 20 in this embodiment includes the driving support unit 22 that may stop movement of the mobile object 20 when the presence of interfering factors is detected. With this configuration, the mobile object 20 can stop driving support based on the detection results of the first detection unit 13 if the reliability of the detection results is relatively low. Thus, the mobile object 20 improves the safety of driving support provided by the driving support unit 22.

Embodiments of the present disclosure have been described based on the drawings and examples, but note that a variety of variations and amendments may be easily made by one skilled in the art based on the present disclosure. Therefore, note that such variations and amendments are included within the scope of the present disclosure. For example, the functions and so forth included in each component or step can be rearranged in a logically consistent manner, and a plurality of components or steps can be combined into a single component or step or a single component or step can be divided into a plurality of components or steps. Although embodiments of the present disclosure have been described while focusing on devices, the embodiments of the present disclosure can also be realized as a method including steps executed by individual component of the device. The embodiments of the present disclosure can also be realized as a method executed by a processor included in a device, a program, or a storage medium recording the program. Please understand that the scope of the present disclosure also includes these forms.

For example, the switching unit 18 of this embodiment is configured to reflect electromagnetic waves incident on the action surface as in the first state in the third direction d3 and to reflect electromagnetic waves incident on the action surface as in the second state in the fourth direction d4, but other configurations may be employed.

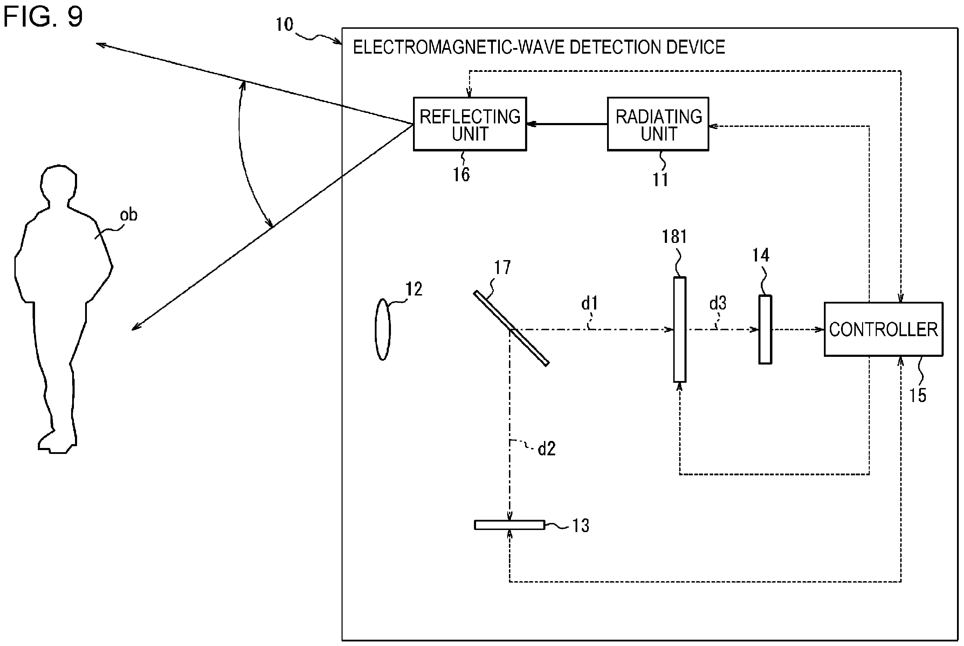

For example, as illustrated in FIG. 9, a switching unit 181 may allow the electromagnetic waves incident on the action surface AS in the first state to pass therethrough and cause the electromagnetic waves to travel in the third direction d3. The switching unit 181 may further specifically include a shutter having a reflective surface that reflects electromagnetic waves in a fourth direction for each switching element. In the switching unit 181 of this configuration, propagation in the third direction d3 and propagation in the fourth direction d4 can be switched in each switching element by opening and closing the shutter for each switching element.

The switching unit 181 in this configuration includes, for example, a switching unit that includes a MEMS shutter with an array of multiple shutters that can be opened and closed. Examples of the switching unit 181 include a switching unit that includes a liquid crystal shutter that can switch between a reflecting state in which electromagnetic waves are reflected and a transmitting state in which electromagnetic waves are transmitted in accordance with the liquid crystal orientation.

In this embodiment, the electromagnetic-wave detection device 10 has a configuration in which a beam of electromagnetic waves radiated from the radiating unit 11 is scanned by the reflecting unit 16, and the first detection unit 13 is made to function as a scanning active sensor in cooperation with the reflecting unit 16. However, the electromagnetic-wave detection device 10 is not limited to this configuration. For example, an effect similar to that of this embodiment may be obtained if the electromagnetic-wave detection device 10 does not include the reflecting unit 16, and has a configuration in which radiating electromagnetic waves are emitted from the radiating unit 11 and information is acquired without scanning.

In the present disclosure, "first", "second," and so on are identifiers used to distinguish between such configurations. Regarding the configurations, "first", "second", and so on used to distinguish between the configurations in the present disclosure may be exchanged with each other. For example, identifiers "first" and "second" may be exchanged between a first camera and a second camera. Exchanging of the identifiers takes place simultaneously. Even after exchanging the identifiers, the configurations are distinguishable from each other. The identifiers may be deleted. The configurations that have had their identifiers deleted are distinguishable from each other by symbols. Just the use of identifiers such as "first" and "second" in this disclosure are not to be used as a basis for interpreting the order of such configurations or the existence of identifiers with smaller numbers.

Many aspects of the content of the present disclosure are presented as a series of operations executed by a computer system or other hardware capable of executing program instructions. Computer systems and other hardware include, for example, general-purpose computers, personal computers (PCs), dedicated computers, workstations, personal communications system (PCS), mobile (cellular) telephones, mobile telephones with data processing capabilities, RFID receivers, games consoles, electronic notepads, laptop computers, global positioning system (GPS) receivers or other programmable data processing devices. Note that in each embodiment, various operations are performed by dedicated circuits (for example, individual logic gates interconnected to perform specific functions) implemented using program instructions (software), or by logic blocks or program modules executed by one or more processors. Examples of "one or more processors that execute logic blocks or program modules" may include one or more microprocessors, a central processing unit (CPU), an application specific integrated circuit (ASIC), a digital signal processor (DSP), a programmable logic device (PLD), a field programmable gate array (FPGA), a processor, a controller, a microcontroller, a microprocessor, an electronic device, or another device designed to perform the functions described herein, and/or any combination of these. The embodiments described herein are implemented, for example, using hardware, software, firmware, middleware, microcode, or any combination thereof. Instructions may be program code or code segments for performing the required tasks. The instructions can be stored in a machine-readable non-transitory storage medium or another medium. Code segments may represent any combination of procedures, functions, subprograms, programs, routines, subroutines, modules, software packages, classes or instructions, data structures or program statements. Code segments transmit and/or receive information, data arguments, variables or stored content from and/or to other code segments or hardware circuits, and in this way, connect to other code segments or hardware circuits.

Note that a system is disclosed herein as having various modules and/or units that perform specific functions. These modules and units are illustrated in a schematic manner in order to briefly illustrate their functionality and do not necessarily represent specific hardware and/or software. In that sense, these modules, units, and other components may be hardware and/or software implemented to substantially perform the specific functions described herein. The various functions of the different components may be any combination of hardware and/or software or hardware and/or software used separately from each other, and can be used separately or in any combination. In addition, input/output or I/O devices or user interfaces, including but not limited to keyboards, displays, touch screens, pointing devices, and so forth, can be connected directly to the system or via an I/O controller interposed therebetween. Thus, various aspects of the contents of the present disclosure can be implemented in numerous different ways, all of which are included within the scope of the present disclosure.

### REFERENCE SIGNS

- 10: electromagnetic-wave detection device
- 11: radiating unit
- 12: incidence unit
- 13: first detection unit
- 14: second detection unit
- 15: controller
- 16: reflecting unit
- 17: separation unit
- 18: switching unit
- 19: later-stage optical system
- 20: mobile object
- 21: notification unit
- 22: driving support unit
- as: action surface
- d1: first direction
- d2: second direction
- d3: third direction
- d4: fourth direction
- IM: image
- ob: object
- UC, UC1, UC2, UC3, UC4: smudge

## Claims

1. An electromagnetic-wave detection device comprising:
a radiating unit configured to radiate electromagnetic waves in multiple different directions in space;
an incidence unit on which electromagnetic waves from the space are incident, the electromagnetic waves including reflected waves resulting from electromagnetic waves radiated by the radiating unit being reflected by an object in the space;
a first detection unit configured to detect at least the reflected waves incident on the incidence unit;
a second detection unit configured to detect at least a portion of the electromagnetic waves incident on the incidence unit; and
a controller configured to determine, based on detection results of the second detection unit, a presence or absence of an interfering factor that may interfere with detection of the reflected waves by the first detection unit.

2. The electromagnetic-wave detection device according to claim 1,
wherein, based on detection results of the first detection unit, the controller performs distance measurement for an object in a radiation direction of electromagnetic waves in the space.

3. The electromagnetic-wave detection device according to claim 1 or 2,
wherein the second detection unit is an image sensor, and
the controller regards a smudge within an image detected by the second detection unit as the interfering factor.

4. The electromagnetic-wave detection device according to any one of claims 1 to 3,
wherein the radiating unit radiates electromagnetic waves into the space without the electromagnetic waves passing through the incidence unit.

5. The electromagnetic-wave detection device according to any one of claims 1 to 4,
wherein the controller outputs an inaccuracy notification for detection results of the first detection unit based on a position of the interfering factor in full detection results of the second detection unit.

6. The electromagnetic-wave detection device according to claim 5,
wherein the controller outputs an inaccuracy notification if the interfering factor is present in a movement region where a mobile object equipped with the electromagnetic-wave detection device can move in the full detection results of the second detection unit.

7. The electromagnetic-wave detection device according to claim 6,
wherein the movement region is a region, excluding sky, in the full detection results of the second detection unit and includes a road along which the mobile object moves.

8. The electromagnetic-wave detection device according to any one of claims 5 to 7,
wherein the controller outputs the inaccuracy notification when a total of sizes of the interfering factors in the full detection results of the second detection unit is greater than or equal to a threshold.

9. The electromagnetic-wave detection device according to any one of claims 5 to 7,
wherein the controller outputs the inaccuracy notification when the size of any of the individual interfering factors in the full detection results of the second detection unit is greater than or equal to a threshold.

10. The electromagnetic-wave detection device according to claim 9,
wherein the threshold is set for each region in the full detection results of the second detection unit and is smallest at a farthest position corresponding to a most distant position in the space.

11. The electromagnetic-wave detection device according to any one of claims 1 to 10, further comprising:
a switching unit including multiple switching elements that can switch between a first state in which incident electromagnetic waves are allowed to proceed to the first detection unit and a second state in which incident electromagnetic waves are not allowed to proceed to the first detection unit,
wherein the controller sets the switching elements in a region where the reflected waves are incident on the switching unit, out of the switching elements, to the first state, and when the reflected waves are incident on the switching unit via the interfering factor, the controller sets a greater number of the switching elements to the first state than when the reflected waves are incident on the switching unit without passing through the interfering factor.

12. The electromagnetic-wave detection device according to any one of claims 6 to 11,
wherein the inaccuracy notification is a warning or an order to stop.

13. A mobile object comprising:
a radiating unit configured to radiate electromagnetic waves in multiple different directions in space;
an incidence unit on which electromagnetic waves from the space are incident, the electromagnetic waves including reflected waves resulting from electromagnetic waves radiated by the radiating unit being reflected by an object in the space;
a first detection unit configured to detect at least the reflected waves incident on the incidence unit;
a second detection unit configured to detect at least a portion of the electromagnetic waves incident on the incidence unit; and
a controller configured to determine, based on detection results of the second detection unit, a presence or absence of an interfering factor that may interfere with detection of the reflected waves by the first detection unit.

14. The mobile object according to claim 13, further comprising:
a notification unit configured to issue a warning when the controller identifies the presence of the interfering factor.

15. The mobile object according to claim 13 or 14, further comprising:
a driving support unit configured to stop movement of the mobile object when the controller determines the presence of the interfering factor.
